# EUROPEAN PATENT APPLICATION

(11) **EP 4 752 123 A1**
(43) Date of publication of application: **03.06.2026**
(21) Application number: 23946623.8
(22) Date of filing: 24.07.2023
(51) Int. Cl.: C04B 38/00

(54) **HONEYCOMB STRUCTURE AND METHOD FOR PRODUCING SAME**

(71) Applicant: NGK Insulators, Ltd., Nagoya-shi, Aichi 467-8530 (JP)
(72) Inventor: ONO,Mitsuharu, Nagoya-shi, Aichi 467-8530 (JP); NAKASHIMA,Takuya, Nagoya-shi, Aichi 467-8530 (JP); MOTOKI,Koji, Nagoya-shi, Aichi 467-8530 (JP); NAGAI,Shungo, Nagoya-shi, Aichi 467-8530 (JP); SUENOBU,Hiroyuki, Nagoya-shi, Aichi 467-8530 (JP); FUKUYO,Koji, Nagoya-shi, Aichi 467-8530 (JP); TOYOSHIMA,Hideyuki, Nagoya-shi, Aichi 467-8530 (JP); YAMASHITA,Masataka, Nagoya-shi, Aichi 467-8530 (JP)
(74) Representative: MERH-IP Matias Erny Reichl Hoffmann Patentanwälte PartG mbB
(86) International application number: PCT/JP2023/027070
(87) International publication number: WO 2025/022538

(57) **Abstract**

A honeycomb structure comprising a plurality of cell channels that pass through an interior of the honeycomb structure and are partitioned by partition walls, wherein the partition walls comprise a solid organic compound having an amino group, an organic binder, and an inorganic binder.

## Description

### FIELD OF THE INVENTION

The present invention is related to a honeycomb structure and a method for producing the same. More particularly, the present invention is related to a honeycomb structure having a CO₂ adsorption capability and a method for producing the same.

### BACKGROUND OF THE INVENTION

In order to realize a decarbonized society, there is a growing need for technology to capture and utilize carbon dioxide (CO₂) from the atmosphere and exhaust gases. A typical conventional CO₂ capture technology that has been developed is a technology for adsorbing CO₂ in the atmosphere (DAC: Direct Air Capture). There are several types of DAC, including liquid absorption method, membrane separation method, and solid adsorption method. In the solid adsorption method, CO₂ adsorption (absorption) material is generally supported on a substrate. As a substrate to be used in the solid adsorption method, a honeycomb structure is expected to be used, which has a proven track record in purifying automobile exhaust gases.

Conventional honeycomb structures have generally been produced by kneading a forming raw material containing ceramic raw materials, water, a binder, and the like to obtain a green body, extrusion molding the resulting green body to prepare a honeycomb formed body, and then subjecting the honeycomb formed body to a heat treatment such as firing (Patent Literature 1). However, heat treatments such as firing require a large amount of energy and often involve the combustion of hydrocarbon fuels, which generates CO₂. Furthermore, if an organic binder is used as the binder, further CO₂ is generated by combustion during firing.

Patent Literature 2 describes a honeycomb ceramic substrate for CO₂ capture. This honeycomb ceramic substrate for CO₂ capture comprises a honeycomb ceramic substrate having porous partition walls, a plurality of inorganic support particles within at least one pore of the porous partition walls, and an organic carbon dioxide adsorbent supported by at least one of the inorganic support particles. This honeycomb ceramic substrate for CO₂ capture is produced through high temperature heat treatment. Specifically, the honeycomb ceramic substrate obtained through the forming and firing processes is contacted with a support precursor slurry, calcined at a temperature of about 100 °C to about 600 °C for about 1 hour to about 10 hours, contacted with an organic CO₂ adsorbent, and then dried at a temperature of about 50 °C to about 100 °C to produce the honeycomb ceramic substrate.

Under the above-mentioned background technology, a technique for producing a honeycomb structure without firing is also known. Patent Literature 3 describes a honeycomb substrate having a plurality of partition walls extending axially from an inlet end to an outlet end, thereby forming a plurality of flow channels, the honeycomb substrate comprising a mixture of inorganic powder components and an organic binder, and an amine polymer having functional structural unit groups capable of absorbing CO₂ dispersed in the inorganic powder components of the partition walls of the honeycomb substrate. The honeycomb substrate is formed by a method that includes dry blending inorganic oxide powder components and an organic binder into a mixture; adding a solution of an amine polymer and a solvent to the mixture to form a precursor; kneading the precursor; extrusion molding the kneaded precursor to form an interconnected monolith having a plurality of partition walls extending axially from an inlet end to an outlet end thereby forming a plurality of flow channels; and drying to remove the solvent from the interconnected monolith to form an absorbent structure for CO₂ capture.

### PRIOR ART

### Patent Literature

[Patent Literature 1] Japanese Patent Application Publication No. 2020-019690
[Patent Literature 2] Japanese Patent Application Publication No. 2018-538137
[Patent Literature 3] Japanese Patent Application Publication No. 2015-508018

### SUMMARY OF THE INVENTION

The honeycomb substrate described in Patent Literature 3 uses an amine polymer and has a functional structural unit group that absorbs CO₂, making it possible to capture CO₂. Further, since the honeycomb substrate is produced without undergoing a firing process that requires high heating temperatures, it is possible to reduce CO₂ emissions during producing. However, the honeycomb substrate described in Patent Literature 3 uses an amine polymer, which is easily dissolved in water. Furthermore, many of the organic binders that remain when the material is not fired are water-soluble. For this reason, the honeycomb substrate described in Patent Literature 3 has room for improvement in terms of water resistance. There is also room for improvement in terms of suppressing cracking during drying.

In view of the above circumstances, an object of one embodiment of the present invention is to provide a honeycomb structure that has CO₂ adsorption capability, is easy to form, generates little CO₂ during production, is less likely to crack during drying, and also has improved water resistance. An object of another embodiment of the present invention is to provide a method for producing such a honeycomb structure.

The present inventors have conducted extensive research to solve the above problems and have found that it is advantageous to use a combination of a predetermined CO₂ adsorbent, an organic binder, and an inorganic binder as materials for the honeycomb structure. The present invention has been completed based on the above findings, and is exemplified as below.

### [Aspect 1]

A honeycomb structure comprising:
a plurality of cell channels that pass through an interior of the honeycomb structure and are partitioned by partition walls,
wherein the partition walls comprise a solid organic compound having an amino group, an organic binder, and an inorganic binder.

### [Aspect 2]

The honeycomb structure according to aspect 1, wherein the solid organic compound having the amino group is water-insoluble.

### [Aspect 3]

The honeycomb structure according to aspect 1 or 2, wherein a content of the solid organic compound having the amino group in the partition walls is 40 to 94% by mass, a content of the inorganic binder in the partition walls is 3 to 50% by mass, and a content of the organic binder in the partition walls is 3 to 20% by mass.

### [Aspect 4]

The honeycomb structure according to aspect 1 or 2, wherein a content of the solid organic compound having the amino group in the partition walls is 40 to 90% by mass, a content of the inorganic binder in the partition walls is 5 to 35% by mass, and a content of the organic binder in the partition walls is 5 to 10% by mass.

### [Aspect 5]

The honeycomb structure according to any one of aspects 1 to 4, wherein the solid organic compound having the amino group is a weakly basic anion exchange resin having the amino group.

### [Aspect 6]

The honeycomb structure according to any one of aspects 1 to 5, wherein the solid organic compound having the amino group comprises one or more selected from a styrene-based divinylbenzene polymer having the amino group and an acrylic-based divinylbenzene polymer having the amino group.

### [Aspect 7]

The honeycomb structure according to any one of aspects 1 to 6, wherein the solid organic compound having the amino group comprises a primary amine as a functional group.

### [Aspect 8]

The honeycomb structure according to any one of aspects 1 to 7, wherein the solid organic compound having the amino group comprises an aromatic ring.

### [Aspect 9]

The honeycomb structure according to any one of aspects 1 to 8, wherein the inorganic binder comprises one or more inorganic binders selected from fibrous and granular inorganic binders.

### [Aspect 10]

The honeycomb structure according to any one of aspects 1 to 9, wherein the inorganic binder comprises one or more inorganic binders selected from clay, diatomaceous earth, layered clay minerals, montmorillonite, hydrotalcite, activated clay, acid clay, hectorite, halloysite, attapulgite, silica, alumina, talc, chlorite, vermiculite, mica, illite, pyrophyllite, sericite, kaolin, sepiolite, boehmite, palygorskite, and bentonite.

### [Aspect 11]

The honeycomb structure according to aspect 10, wherein the inorganic binder comprises one or more selected from sepiolite, boehmite, bentonite, silica, kaolin, and talc.

### [Aspect 12]

The honeycomb structure according to aspect 11, wherein the inorganic binder comprises sepiolite.

### [Aspect 13]

A method for producing a honeycomb structure, comprising:
kneading a forming raw material comprising a solvent, a solid organic compound having an amino group, an organic binder, and an inorganic binder to prepare a green body; and
forming a honeycomb structure from the green body, the honeycomb structure having a plurality of cell channels that pass through an interior of the honeycomb structure and are partitioned by partition walls.

### [Aspect 14]

The method according to aspect 13, wherein the solid organic compound having the amino group is water-insoluble.

### [Aspect 15]

The method according to aspect 13 or 14, wherein a content of the solid organic compound having the amino group in the forming raw material excluding the solvent is 40 to 94% by mass, a content of the inorganic binder in the forming raw material excluding the solvent is 3 to 50% by mass, and a content of the organic binder in the forming raw material excluding the solvent is 3 to 20% by mass.

### [Aspect 16]

The method according to aspect 13 or 14, wherein a content of the solid organic compound having the amino group in the forming raw material excluding the solvent is 40 to 90% by mass, a content of the inorganic binder in the forming raw material excluding the solvent is 5 to 35% by mass, and a content of the organic binder in the forming raw material excluding the solvent is 5 to 10% by mass.

### [Aspect 17]

The method according to any one of aspects 13 to 16, wherein the solid organic compound having the amino group is a weakly basic anion exchange resin having the amino group.

### [Aspect 18]

The method according to any one of aspects 13 to 17, wherein the solid organic compound having the amino group comprises one or more selected from a styrene-based divinylbenzene polymer having the amino group and an acrylic-based divinylbenzene polymer having the amino group.

### [Aspect 19]

The method according to any one of aspects 13 to 18, wherein the solid organic compound having the amino group comprises a primary amine as a functional group.

### [Aspect 20]

The method according to any one of aspects 13 to 19, wherein the solid organic compound having the amino group comprises an aromatic ring.

### [Aspect 21]

The method according to any one of aspects 13 to 20, wherein the inorganic binder comprises one or more inorganic binders selected from fibrous and granular inorganic binders.

### [Aspect 22]

The method according to any one of aspects 13 to 21, wherein the inorganic binder comprises one or more inorganic binders selected from clay, diatomaceous earth, layered clay minerals, montmorillonite, hydrotalcite, activated clay, acid clay, hectorite, halloysite, attapulgite, silica, alumina, talc, chlorite, vermiculite, mica, illite, pyrophyllite, sericite, kaolin, sepiolite, boehmite, palygorskite, bentonite, colloidal silica and alumina sol.

### [Aspect 23]

The method according to aspect 22, wherein the inorganic binder comprises one or more selected from sepiolite, boehmite, bentonite, silica, kaolin, and talc.

### [Aspect 24]

The method according to aspect 23, wherein the inorganic binder comprises sepiolite.

The honeycomb structure according to one embodiment of the present invention has CO₂ adsorption capacity, is easy to form, generates little CO₂ during production, is less likely to crack during drying, and also has improved water resistance. Further, the honeycomb structure can be produced without high-temperature heat treatment, thereby reducing the amount of CO₂ emitted during production. The honeycomb structure is highly practical as a product that adsorbs CO₂ from the atmosphere, and is thought to make a significant contribution to the realization of a carbon-free society.

### BRIEF DESCRIPTION OF THE DRAWINGS

FIG. 1 is A schematic perspective view of a honeycomb structure according to one embodiment of the present invention.
FIG. 2 is a schematic view of a cross section parallel to the height direction (the direction in which the cells extend) of a honeycomb structure according to one embodiment of the present invention.
FIG. 3 is a diagram schematically illustrating a method for measuring the hardness of a green body using a hardness tester.
FIG. 4 is an enlarged view showing the shape and dimensions of the tip of a hardness tester.
FIG. 5 is a graph showing the spring properties of a spring material used in a hardness tester.

### DETAILED DESCRIPTION OF THE INVENTION

Hereinafter, embodiments of the present invention will now be described in detail with reference to the drawings. It should be understood that the present invention is not intended to be limited to the following embodiments, and any change, improvement or the like of the design may be appropriately added based on ordinary knowledge of those skilled in the art without departing from the spirit of the present invention.

### (1. Honeycomb structure)

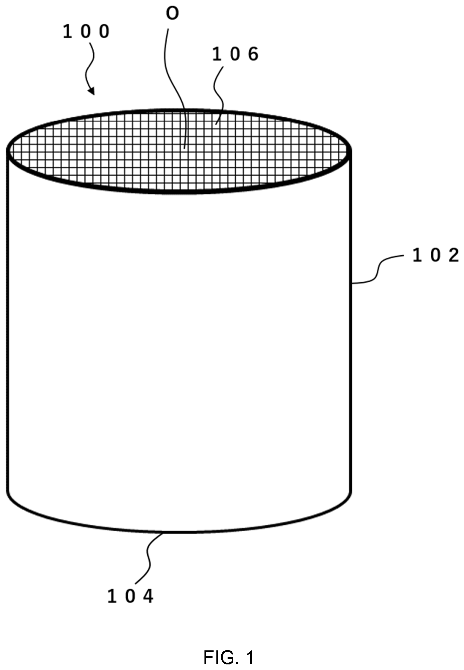

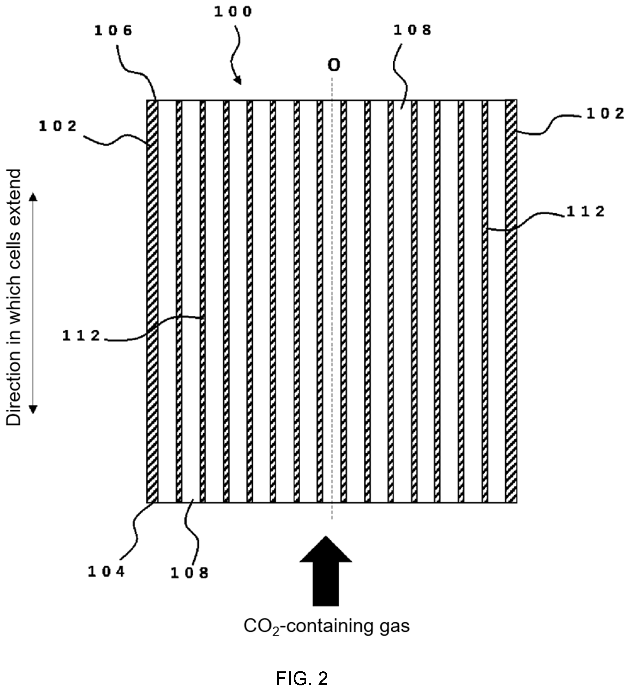

FIG. 1 shows a schematic perspective view of a honeycomb structure according to one embodiment of the present invention. FIG. 2 shows a schematic cross-section parallel to the height direction (the direction in which the cells extend) of the honeycomb structure shown in FIG. 1.

The honeycomb structure 100 of this embodiment comprises an outer peripheral side wall 102 and partition walls 112 arranged on the inner peripheral side of the outer peripheral side wall 102, extending from a first end surface 104 to a second end surface 106, and partitioning a plurality of cells 108 that form fluid flow paths (cell channels). The plurality of cells 108 are arranged parallel to each other. The honeycomb structure 100 according to this embodiment is a flow-through type in which both ends of each cell 108 are open on the first end surface 104 and the second end surface 106, and when a gas containing CO₂ such as the atmosphere flows in through the first end surface 104 where the inlets of the plurality of cells 108 are located, the CO₂ is adsorbed as it passes through the plurality of cells 108, and gas with a reduced CO₂ concentration flows out from the second end surface 106 where the outlets of the plurality of cells 108 are located.

The shape of the end surfaces of the honeycomb structure is not particularly limited, and may be, for example, a round shape such as a circle, an ellipse, a racetrack shape, or an oval shape, a polygonal shape such as a triangle or a quadrangle, or any other irregular shape. The overall external shape of the honeycomb structure can typically be a pillar shape. The honeycomb structure 100 shown in FIG. 1 has circular end surfaces and is cylindrical shape as a whole.

When the honeycomb structure has a pillar shape, its height (the length from the first end surface to the second end surface) is not particularly limited and may be set appropriately depending on the application and required performance. There is no particular limitation on the relationship between the height of the honeycomb structure and the maximum diameter of each end surface (the maximum length of the diameters passing through the center of gravity of each end surface of the honeycomb structure). Therefore, the height of the honeycomb structure may be longer than the maximum diameter of each end surface, or the height of the honeycomb structure may be shorter than the maximum diameter of each end surface.

There is no particular limitation on the length of the honeycomb structure in the direction in which the cells extend (the height direction). However, while a longer length can increase the amount of CO₂ adsorption, if the length is too long, the pressure loss will increase, so the length is preferably 20 to 350 mm, more preferably 20 to 300 mm, and even more preferably 20 to 250 mm.

There is no particular limitation on the maximum diameter of each end surface of the honeycomb structure. However, while a larger maximum diameter can increase the amount of CO₂ adsorption, if the maximum diameter is too large it becomes more difficult to produce, so the maximum diameter is preferably 20 to 450 mm, more preferably 20 to 400 mm, and even more preferably 20 to 350 mm.

The partition walls and outer peripheral side wall of the honeycomb structure comprise a solid organic compound having an amino group (one or more selected from -NH, -NHR, and -NRR' (R and R' represent organic groups)), an organic binder, and an inorganic binder. As the solid organic compound having the amino group, the organic binder, and the inorganic binder, one type may be used alone, and two or more types may be used in combination, respectively.

While not intending to limit the present invention by any theory, a solid organic compound having the amino group adsorb CO₂ by reacting with CO₂ to form carbamates or bicarbonates. Both the organic binder and the inorganic binder are useful for ensuring the strength of the honeycomb structure, but the organic binder also contributes to improving the formability, and the inorganic binder also contributes to improving the water resistance and suppressing cracks during drying. To ensure formability, it is preferable to use a water-soluble organic binder, but if the water-soluble organic binder is contained in the honeycomb structure, the water resistance is reduced. Therefore, when the inorganic binder, which is generally water-insoluble, is added to the honeycomb structure, the effect of suppressing the decrease in water resistance can be obtained.

As used herein, "water-insoluble" refers to the property that when 11 g of the substance to be tested is added to 1 L of water at 20 °C and stirred for 30 minutes at 500 rpm, and the liquid portion is removed by suction filtration using filter paper type 5C specified in JIS P3801-1995, then the mass of the solid portion when dried is 10 g or more.

From the viewpoint of achieving a good balance among CO₂ adsorption performance, crack suppression during drying, and water resistance, in a preferred embodiment, the content of the solid organic compound having the amino group in the partition walls and the outer peripheral side wall is 40 to 94% by mass, the content of the inorganic binder in the partition walls and the outer peripheral side wall is 3 to 50% by mass, and the content of the organic binder in the partition walls and the outer peripheral side wall is 3 to 20% by mass. In a more preferred embodiment, the content of the solid organic compound having the amino group in the partition walls and the outer peripheral side wall is 40 to 90% by mass, the content of the inorganic binder in the partition walls and the outer peripheral side wall is 5 to 40% by mass, and the content of the organic binder in the partition walls and the outer peripheral side wall is 5 to 15% by mass. In an even more preferred embodiment, the content of the solid organic compound having the amino group in the partition walls and the outer peripheral side wall is 40 to 90% by mass, the content of the inorganic binder in the partition walls and the outer peripheral side wall is 5 to 35% by mass, and the content of the organic binder in the partition walls and the outer peripheral side wall is 5 to 10% by mass.

The partition walls and the outer peripheral side wall may comprise components other than the solid organic compound having the amino group, the inorganic binder, and the organic binder. For example, a surfactant, a pore-forming material, etc. may be added. However, in a typical embodiment, the total content of the solid organic compound having the amino group, the inorganic binder, and the organic binder in the partition walls and the outer peripheral side wall is 90% by mass or more. In a more typical embodiment, the total content of the solid organic compound having the amino group, the inorganic binder, and the organic binder in the partition walls and the outer peripheral side wall is 95% by mass or more. Furthermore, the total content of the solid organic compound having the amino group, the inorganic binder, and the organic binder in the partition walls and the outer peripheral side walls may be 99% by mass or more.

From the viewpoint of water resistance, it is desirable that the solid organic compound having the amino group is water-insoluble. In addition, the solid organic compound having the amino group may have any one of -NH₂, - NHR, and -NRR' (R and R' represent organic groups), or may have two or more of these in combination. Among amino groups, it is particularly preferred to have a primary amine (-NH₂) as a functional group. It is also preferred that the solid organic compound having the amino group contains an aromatic ring.

A specific example of the solid organic compound having the amino group is a weakly basic anion exchange resin having the amino group. Therefore, for example, the solid organic compound having the amino group includes one or more selected from a styrene-based divinylbenzene polymer having the amino group (for example, a copolymer of styrene and divinylbenzene) and an acrylic-based divinylbenzene polymer having the amino group (for example, a copolymer of divinylbenzene with one or both of acrylic acid and methacrylic acid).

From the viewpoint of CO₂ adsorption performance, the exchange capacity of the weakly basic anion exchange resin is preferably 0.6 meq/mL or more, more preferably 1.0 meq/mL or more, and even more preferably 1.4 meq/mL or more. The exchange capacity of the weakly basic anion exchange resin is measured by treating 10 mL of the ion exchange resin measured by the tapping method with hydrochloric acid, washing off the excess hydrochloric acid with ethanol, and then passing ammonia water through it, and measuring the amount of chloride ions that flow out.

As the organic binder, for example, mention can be made to organic binders such as methylcellulose, hydroxypropyl methylcellulose, hydroxyethyl cellulose, hydroxypropyl cellulose, carboxymethyl cellulose, polyvinyl alcohol, hydroxyethyl methylcellulose, polyvinyl acetal, polyethylene oxide, polyvinyl butyral, polybutadiene, methacrylate ester, acrylic, ethyl cellulose, silicone, and polyolefin. In particular, by using a water-soluble organic binder such as methyl cellulose, hydroxypropyl methyl cellulose, hydroxyethyl cellulose, hydroxypropyl cellulose, carboxymethyl cellulose, polyvinyl alcohol, hydroxyethyl methyl cellulose, polyvinyl acetal, or polyethylene oxide, it is possible to reduce the environmental impact, the danger of organic solvent vapor during drying, and the production cost. For the organic binder, it is preferable that, when 11 g of the substance to be tested is added to 1L of water at 60 °C, stirred at 500 rpm for 30 minutes, cooled to 20 °C after stirring is completed, and the liquid portion is removed by suction filtration using filter paper type 5C specified in JIS P3801-1995, then the mass of the solid portion when dried is 1 g or less. For the organic binder, it is more preferable that, when 21 g of the substance to be tested is added to 1L of water at 60 °C, stirred at 500 rpm for 30 minutes, cooled to 20 °C after stirring is completed, and the liquid portion is removed by suction filtration using filter paper type 5C specified in JIS P3801-1995, then the mass of the solid portion when dried is 1 g or less. For the organic binder, it is more preferable that, when 31 g of the substance to be tested is added to 1L of water at 60 °C, stirred at 500 rpm for 30 minutes, cooled to 20 °C after stirring is completed, and the liquid portion is removed by suction filtration using filter paper type 5C specified in JIS P3801-1995, then the mass of the solid portion when dried is 1 g or less.

The inorganic binder may be one or more inorganic binders selected from fibrous and granular inorganic binders, and among these, fibrous inorganic binders are preferred. Inorganic binders are generally water-insoluble and therefore act to increase the water resistance of the honeycomb structure. Further, it also acts to suppress cracks during drying. As used herein, a "fibrous" inorganic binder refers to an inorganic binder having an average aspect ratio of 3 or more. A "granular" inorganic binder refers to an inorganic binder having an average aspect ratio of less than 3. The average aspect ratio of the inorganic binder is determined by the following procedure: A test piece of the honeycomb structure is cut to an appropriate size, placed in a crucible, and heated to 500 °C in an electric furnace to remove organic matter. Next, the remaining inorganic binder is dispersed on a specimen stage for a scanning electron microscope (SEM), and the magnification is adjusted to fit the inorganic binder so that 20 inorganic binder particles are entirely fit within one field of view. The longest diameter and the shortest diameter of arbitrary 20 inorganic binder particles among them are measured, and the average value of the longest diameter / shortest diameter is taken as the average aspect ratio of the inorganic binder. The longest diameter of one inorganic binder particle refers to the longest distance between two parallel lines sandwiching the inorganic binder particle on an SEM image. The shortest diameter of one inorganic binder particle refers to the shortest length among the distances between two parallel lines sandwiching the inorganic binder particle on an SEM image.

As specific examples of inorganic binders, mention can be made to one or more selected from clay, diatomaceous earth, layered clay minerals, montmorillonite, hydrotalcite, activated clay, acid clay, hectorite, halloysite, attapulgite, silica, alumina, talc, chlorite, vermiculite, mica, illite, pyrophyllite, sericite, kaolin, sepiolite, boehmite, palygorskite, and bentonite.

Among these, the inorganic binder preferably comprises one or more selected from sepiolite, boehmite, bentonite, silica, kaolin and talc, and more preferably comprises sepiolite.

Therefore, the total content of one or more selected from sepiolite, boehmite, bentonite, silica, kaolin, and talc in the partition walls and the outer peripheral side wall is preferably 3 to 50% by mass, more preferably 5 to 40% by mass, and still more preferably 5 to 35% by mass. Furthermore, the content of sepiolite in the partition walls and the outer peripheral side wall is preferably 3 to 50% by mass, more preferably 5 to 40% by mass, and even more preferably 5 to 35% by mass.

There is no particular limitation on the average thickness of the partition walls, but from the viewpoint of ensuring strength, it is preferably 50 µm or more, more preferably 60 µm or more, and even more preferably 70 µm or more. In addition, from the viewpoint of suppressing pressure loss, the average thickness of the partition walls is preferably 600 µm or less, more preferably 550 µm or less, and even more preferably 500 µm or less. Therefore, the average thickness of the partition walls is preferably, for example, 50 to 600 µm, more preferably 60 to 550 µm, and even more preferably 70 to 500 µm. As used herein, the thickness of the partition wall is defined as a crossing length of a line segment that crosses the partition wall when the centers of gravity of adjacent cells are connected by this line segment in a cross-section orthogonal to the direction in which the cells extend. In addition, the average thickness of the partition walls refers to the average value of the thicknesses of all the partition walls of the honeycomb structure.

The partition walls may be porous. When the partition walls are porous, the porosity of the partition walls is preferably 5% or more, more preferably 10% or more, and further preferably 15% or more, from the viewpoint of improving the adsorption performance of the CO₂ adsorbent and of suppressing the pressure loss when a fluid is caused to flow through the cells. In addition, from the viewpoint of ensuring the strength of the honeycomb structure, the porosity of the partition walls is preferably 80% or less, more preferably 75% or less, and even more preferably 70% or less. Therefore, the porosity of the partition walls is preferably, for example, 5 to 80%, more preferably 10 to 75%, and even more preferably 15 to 70%. As used herein, porosity is measured by the mercury intrusion method using a mercury porosimeter in accordance with JIS R1655: 2003.

There is no particular limitation on the cell density (the number of cells per unit cross-sectional area). However, from the viewpoint of improving the contact area between the adsorbent on the partition walls and the passing gas, the cell density is preferably 30 cells/cm² or more, more preferably 40 cells/cm² or more, and even more preferably 50 cells/cm² or more. In addition, from the viewpoint of ensuring a gas flow path and reducing pressure loss, the cell density is preferably 2000 cells/cm² or less, more preferably 1200 cells/cm² or less, and even more preferably 900 cells/cm² or less. Therefore, the cell density is preferably, for example, 30 to 2000 cells/cm², more preferably 40 to 1200 cells/cm², and even more preferably 50 to 900 cells/cm². As used herein, the cell density is calculated by dividing the number of cells in the honeycomb structure by the area of one end surface of the honeycomb structure excluding the outer peripheral side wall.

There is no limitation on the shape of the cells in a cross-section perpendicular to the direction in which the cells extend (the height direction of the honeycomb structure), but it is preferably a quadrangle, a hexagon, an octagon, a circle, or a combination thereof. Among these, a quadrangle and a hexagon are preferred. By using such cell shapes, pressure loss when a fluid is caused to flow through the honeycomb structure is reduced.

### (2. Method for capturing CO₂)

According to one embodiment of the present invention, there is provided a method for capturing CO₂ using the honeycomb structure according to the above-described embodiment. Specifically, according to one embodiment of the present invention, there is provided a method for capturing CO₂, which includes flowing a first gas through the plurality of cell channels of the honeycomb structure according to the above-mentioned embodiment, adsorbing CO₂ in the first gas by the solid organic compound having the amino group while the first gas passes through the plurality of cell channels, and discharging the first gas with a reduced CO₂ concentration from the honeycomb structure.

As the first gas, it is not particularly limited as long as it contains CO₂, and examples thereof include environmental air (outdoor air as well as indoor air), factory exhaust gas, ship exhaust gas, and power plant exhaust gas.

### (3. Method for producing honeycomb structure)

A preferred example of the method for producing a honeycomb structure according to the present invention will be described below. In one embodiment, a method for producing a honeycomb structure according to the present invention comprises a step A of kneading a forming raw material comprising a solvent, a solid organic compound having an amino group, an organic binder, and an inorganic binder to prepare a green body; and a step B of forming a honeycomb structure from the green body, the honeycomb structure having a plurality of cell channels that pass through an interior of the honeycomb structure and are partitioned by partition walls.

### (Step A)

In the step A, a forming raw material comprising a solvent, a solid organic compound having the amino group, an organic binder, and an inorganic binder is kneaded to prepare a green body. As the solvent (dispersion medium), mention can be made to water and a mixed solvent of water and an organic solvent such as alcohol, with water being particularly preferred.

From the viewpoint of achieving a good balance among CO₂ adsorption performance, crack suppression during drying, and water resistance, in a preferred embodiment, the content of the solid organic compound having the amino group in the forming raw material excluding the solvent is 40 to 94% by mass, the content of the inorganic binder in the forming raw material excluding the solvent is 3 to 50% by mass, and the content of the organic binder in the forming raw material excluding the solvent is 3 to 20% by mass. In a preferred embodiment, the content of the solid organic compound having the amino group in the forming raw material excluding the solvent is 40 to 90% by mass, the content of the inorganic binder in the forming raw material excluding the solvent is 5 to 40% by mass, and the content of the organic binder in the forming raw material excluding the solvent is 5 to 15% by mass. In an even more preferred embodiment, the content of the solid organic compound having the amino group in the forming raw material excluding the solvent is 40 to 90% by mass, the content of the inorganic binder in the forming raw material excluding the solvent is 5 to 35% by mass, and the content of the organic binder in the forming raw material excluding the solvent is 5 to 10% by mass.

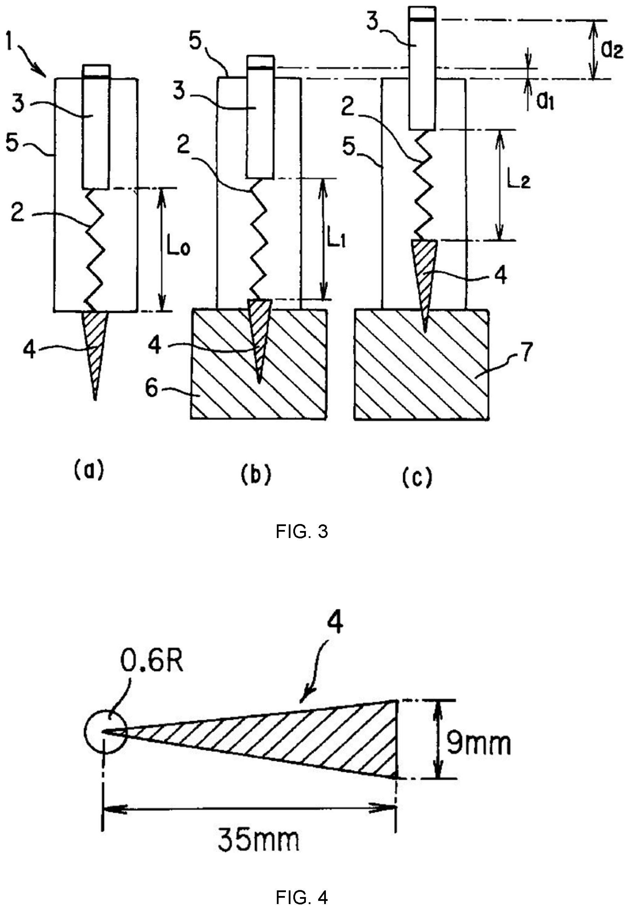

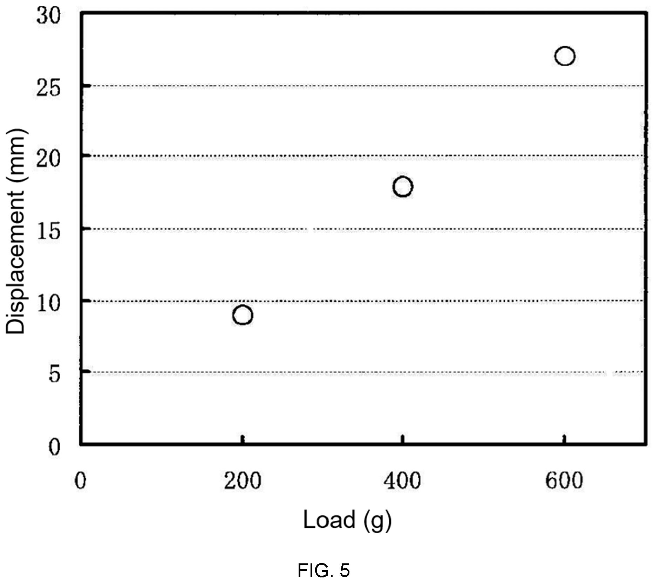

The content of the solvent in the forming raw material is determined so as to obtain a green body hardness suitable for extrusion. The green body hardness is preferably in the range of 14 to 26 mm, more preferably 15 to 25 mm, and even more preferably 16 to 24 mm. Here, in this specification, the green body hardness is measured by the following method. FIG. 3 is a diagram for explaining a method for measuring the hardness of a green body using a hardness tester, in which (a) is an overall view of the hardness tester, (b) is a measurement state when the green body is soft, and (c) is a measurement state when the green body is hard. In addition, FIG. 4 is an enlarged view showing the shape and dimensions of the tip portion of the hardness tester. The hardness tester 1 is constructed by connecting a conical tip portion 4 and a support 3 with a spring material 2, and these are housed in a cylindrical sheath 5 (FIG. 3(a)). FIG. 5 is a graph showing the spring properties of the spring material 2 used. When measuring the hardness of the green body, first, a cubic sample of 20 mm × 20 mm × 20 mm is taken from the green body, the sample is placed on a flat surface, and the tip portion 4 of the hardness meter 1 is inserted vertically from above into the green body 6, 7 until the sheath 5 comes into contact. The insertion is performed so that the speed of the sheath is 1 mm/s. Next, the length (a1, a2) of the support portion 3 protruding above the sheath portion 5 is read 3 seconds after the sheath portion 5 comes into contact with the green body 6, 7, and the value (mm) at this time is defined as the hardness of the green body 6, 7. Therefore, the larger the value is, the higher the hardness of the green body is. As used herein, the hardness of the green body is measured by averaging the measured values at two arbitrary locations. It should be noted that L₀, L₁, and L₂ indicate the lengths of the spring material 2. Hardness testers employing such a hardness measurement method are commercially available, and for example, the NGK-type hardness tester (model number: NGK-01) produced by NGK Insulators, Ltd. can be used.

The preferred properties, types and blending ratios of the solid organic compound having the amino group have already been described, but will be supplemented as below. The solid organic compound having the amino group used as a forming raw material is preferably porous. Furthermore, for the reason of preventing clogging during extrusion, the solid organic compound having the amino group preferably has a median diameter (D50) based on a volume-based cumulative particle size distribution obtained by a laser diffraction / scattering method of 200 µm or less, more preferably 100 µm or less, even more preferably 50 µm or less, even more preferably 30 µm or less, and even more preferably 15 µm or less. For the reason of availability, the median diameter (D50) of the solid organic compound having the amino group is preferably 0.1 µm or more, more preferably 0.5 µm or more, and even more preferably 1 µm or more. Therefore, the median diameter (D50) of the solid organic compound having the amino group is, for example, preferably 0.1 to 100 µm, more preferably 0.5 to 50 µm, even more preferably 1 to 50 µm, even more preferably 1 to 30 µm, and even more preferably 1 to 15 µm.

The preferred properties, types and blending ratios of the organic binder are as described above. The water-soluble organic binder dissolves during kneading. Therefore, there are no particular limitations on the shape and size, and it is sufficient to use an organic binder in a generally available form. When using a water-insoluble organic binder, it will dissolve during kneading if an organic solvent is used. Therefore, there are no particular restrictions on the shape or size, and it is sufficient to use an organic binder in a commonly available form.

The preferred properties, types and blending ratios of the inorganic binder have already been described, but will be supplemented as below. The inorganic binder used as a forming raw material is preferably porous. In addition, for the reason of preventing clogging during extrusion, the inorganic binder preferably has a median diameter (D50) determined from a volume-based cumulative particle size distribution obtained by a laser diffraction / scattering method of 200 µm or less, more preferably 100 µm or less, even more preferably 50 µm or less, even more preferably 30 µm or less, and even more preferably 15 µm or less. For the reason of availability, the median diameter (D50) of the inorganic binder is preferably 0.01 µm or more, more preferably 0.05 µm or more, and even more preferably 0.1 µm or more. Therefore, the median diameter (D50) of the inorganic binder is, for example, preferably 0.01 to 200 µm, more preferably 0.05 to 100 µm, and even more preferably 0.1 to 100 µm.

The honeycomb formed body can be prepared by kneading a raw material composition containing a ceramic raw material, a dispersion medium, a pore-forming material, and a binder to form a green body, and then extrusion molding the green body. Additives such as dispersants can be added to the raw material composition as needed. In extrusion molding, a die having a desired overall shape, cell shape, partition wall thickness, cell density, and the like can be used.

The kneading can be carried out using a known kneader, and it is desirable to carry out the kneading for a time required for each forming raw material to be uniformly distributed in the green body.

### (Step B)

In the step B, the green body is formed into a honeycomb structure having a plurality of cell channels that pass through the interior of the honeycomb structure and are partitioned by partition walls. Typically, in the step B, a honeycomb structure is extrusion molded such that it has an outer peripheral side wall and partition walls arranged on the inner peripheral side of the outer peripheral side wall, extending from the first end surface to the second end surface, and partitioning a plurality of cells that form fluid flow paths (cell channels). In extrusion molding, a die having a desired overall shape, cell shape, partition wall thickness, cell density, and the like can be used.

The honeycomb structure immediately after forming contains a solvent, and it is desirable to remove the solvent by a drying step. In the drying step, a conventionally known drying method such as hot gas drying, microwave drying, dielectric drying, reduced pressure drying, vacuum drying, freeze drying, and the like can be used. Among these, hot gas drying, microwave drying, dielectric drying, or a combination thereof is preferred, as it allows the entire formed body to be dried quickly and uniformly. From the viewpoint of suppressing decomposition of the solid organic compound having the amino group and the organic binder during drying, it is preferable to dry the honeycomb structure in an air atmosphere at 50 to 150 °C, more preferably in an air atmosphere at 60 to 140 °C, and even more preferably in an air atmosphere at 70 to 130 °C.

### EXAMPLES

Hereinafter, the following examples are provided to provide a better understanding of the present invention and its advantages, but the present invention is not limited to these examples.

### (1. Raw material)

As a solid organic compound having the amino group, the following commercially available water-insoluble weakly basic anion exchange resin was prepared.
- A styrene-based divinylbenzene polymer having a primary amine as a functional group with an exchange capacity of 2.0 meq/mL
- An acrylic-based divinylbenzene polymer having a primary amine functional group with an exchange capacity of 2.7 meq/mL

These ion exchange resins were in the form of porous particles. Table 1 shows the median diameter (D50) based on the cumulative particle size distribution on a volume basis measured by a laser diffraction / scattering method.

As inorganic binders, commercially available sepiolite, boehmite, bentonite, colloidal silica, alumina sol, kaolin, and talc were prepared. Table 1 shows the respective shapes and the median diameter (D50) based on the cumulative particle size distribution on a volume basis measured by a laser diffraction / scattering method.

As the organic binder, commercially available methyl cellulose was prepared. 31 g of this methyl cellulose was added to 1 L of water at 60 °C, stirred at 500 rpm for 30 minutes, cooled to 20 °C after stirring was completed. The liquid portion was removed by suction filtration using filter paper type 5C specified in JIS P3801-1995, then the mass of the solid portion when dried was 1 g or less.

### As the solvent, industrial water was used.

### (2. Production of honeycomb structure)

The solid organic compound having the amino group, the inorganic binder, the organic binder, and the solvent were mixed in the mass ratio shown in Table 1 according to the test number to obtain a forming raw material for each test number. In addition, the addition amount of solvent was adjusted for each test number so that the green body hardness measured with an NGK hardness tester (model number: NGK-01) produced by NGK Insulators, Ltd. became 17 mm. Next, the forming raw materials were kneaded for 30 minutes in a vacuum kneader to prepare a cylindrical green body. The contents of the solid organic compound having the amino group, the inorganic binder, and the organic binder in Table 1 refer to the contents when the total of these materials is taken as 100% by mass. In addition, the amount of the solvent refers to parts by mass relative to 100 parts by mass of the total of the solid organic compound having the amino group, the organic binder, and the inorganic binder. In addition, the colloidal silica was provided as a dispersion with a solid content of 50% by mass, and the alumina sol was provided as a dispersion with a solid content of 5% by mass, but only the solid content was described in Table 1.

**Table 1**

| | Forming raw material | | | | | | | | | |
|---|---|---|---|---|---|---|---|---|---|---|
| | Solid organic compound having the amino group | | Inorganic binder | | | | | | | Organic binder |
| | Styrene-based divinylbenzene polymer having a primary amine as a functional group | Acrylic-based divinylbenzene polymer having a primary amine as a functional group | Sepiolite | Boehmite | Bentonite | Colloidal silica | Alumina sol | Kaolin | Talc | Methylcellulose |
| Shape | Porous granular | Porous granular | Porous fibrous | Solid granular | Solid granular | Solid granular | Solid fibrous | Solid granular | Solid granular | |
| D50[µm] | 10 | 10 | 10 | 0.1 | 100 | 0.05 | 0.1 | 10 | 10 | |
| Example 1 | 94% | | 3% | | | | | | | 3% |
| Example 2 | 90% | | 5% | | | | | | | 5% |
| Example 3 | 85% | | 10% | | | | | | | 5% |
| Example 4 | 75% | | 20% | | | | | | | 5% |
| Example 5 | | 75% | 20% | | | | | | | 5% |
| Example 6 | 60% | | 35% | | | | | | | 5% |
| Example 7 | 50% | | 40% | | | | | | | 10% |
| Example 8 | 40% | | 50% | | | | | | | 10% |
| Example 9 | 87% | | 3% | | | | | | | 10% |
| Example 10 | 77% | | 3% | | | | | | | 20% |
| Example 11 | 75% | | | 20% | | | | | | 5% |
| Example 12 | 75% | | | | 20% | | | | | 5% |
| Example 13 | 75% | | | | | 20% | | | | 5% |
| Example 14 | 75% | | | | | | 20% | | | 5% |
| Example 15 | 75% | | | | | | | 20% | | 5% |
| Example 16 | 75% | | | | | | | | 20% | 5% |
| Comparative Example 1 | 95% | | | | | | | | | 5% |
| Comparative Example 2 | 97% | | 3% | | | | | | | |

The obtained cylindrical green body was formed using an extrusion machine having a predetermined die structure to obtain a cylindrical undried honeycomb structure in which each cell had a quadrangular shape in a cross-section perpendicular to the direction in which the cells extended. Formability of the undried honeycomb structure corresponding to each test number was evaluated by visually inspecting the honeycomb structure during extrusion molding. The formability was evaluated according to the following criteria. The results are shown in the "Formability" column of Table 2.
Circle (O): the honeycomb structure was formed without any cracks in the partition walls.
Triangle: cracks were observed in the partition walls, but the honeycomb structure was formed.
Cross (X): the honeycomb structure could not be maintained due to insufficient shape stability.

The obtained undried honeycomb structure was dried by high frequency dielectric heating, and then dried for 2 minutes in an air atmosphere at a temperature of 100 °C using a microwave dryer, and both end surfaces were cut off in a predetermined length to prepare a honeycomb structure. The honeycomb structures obtained by the above producing method according to the respective test numbers had circular end surfaces with a diameter of 60 mm and a height (length in the direction in which the cells extended) of 120 mm. The cell density was 300 cells/cm², the average thickness of the partition walls was 200 µm, and the porosity varied depending on the test number but was in the range of 15 to 70%. The honeycomb structures were prepared in the number required for each test.

### (3. Component analysis of honeycomb structure)

### (a) Organic Binder

The honeycomb structures obtained by the above producing method according to the respective test numbers were crushed in an agate mortar, dispersed in water at 20 °C, and stirred with a magnetic stirrer for 24 hours. In this way, the organic binder was eluted in water. After that, the solid residue was dried to determine the mass loss, and it was found that for the honeycomb structures of all the test numbers, the mass loss essentially corresponded to the mass of the organic binder in the forming raw material excluding the solvent. Therefore, it was found that the content of the organic binder can be quantitatively analyzed from the honeycomb structure. Furthermore, when the molecular structure of the water into which the organic binder had been eluted was analyzed using Fourier transform infrared spectroscopy (FT-IR), the molecular structure shown in Table 2 was detected. This confirmed that the organic binder had dissolved into the water.

### (b) Inorganic binder

The honeycomb structures obtained by the above producing method according to the respective test numbers were intensively heated at 800 °C for 3 hours to remove the organic binder and the solid organic compound having the amino group. After that, the solid residue was dried and the mass of the solid residue was determined, and it was found that for the honeycomb structures of all the test numbers, the mass of the solid residue substantially corresponded to the mass of the inorganic binder in the forming raw material excluding the solvent. Therefore, it was found that the inorganic binder content can be quantitatively analyzed from the honeycomb structure. Furthermore, when the solid residue was analyzed for crystalline substances using X-ray diffraction (XRD), the substances shown in Table 2 were detected.

### (c) Solid organic compound having the amino group

The molecular structure of the solid residue was analyzed by Fourier transform infrared spectroscopy (FT-IR), and the molecular structure shown in Table 2 was detected, confirming the presence of a water-insoluble solid organic compound having the amino group. In addition, from the results of (a) and (b), for the honeycomb structures of all the test numbers, the mass of the solid organic compound having the amino group substantially corresponds to the remaining mass obtained by subtracting the masses of the organic binder and the inorganic binder from the mass of the honeycomb structure.

### (4. Properties of honeycomb structure)

The honeycomb structures having the respective test numbers obtained by the above producing method were evaluated as follows.

### (a) Evaluation of cracks occurred during drying

A cylindrical honeycomb structure having a diameter of 60 mm and a height of 120 mm was cut in a direction perpendicular to the height direction to obtain a cylindrical honeycomb structure having a diameter of 60 mm and a height of 100 mm. The state of cracks in the partition walls when observing the cut surface of the cut honeycomb structure, and the state of fissure-like cracks when observing the outer peripheral surface were checked visually and with a scale, and evaluation was performed according to the following criteria. The results are shown in the "Cracks at drying" column of Table 2.
Circle (O): no visible cracks
Triangle: cracks visible to the naked eye were observed, but less than 3 mm width
Cross (X): cracks greater than 3 mm width

### (b) Evaluation of water resistance

A cube of 25 mm x 25 mm x 25 mm (length in the direction in which the cells extended) was cut out from near the center of a cylindrical honeycomb structure having a diameter of 60 mm and a height of 120 mm. Moist air (humidity 96% or more) at 55 °C was passed through the cells in the cut-out cubic at a flow rate of 0.01 m³/s for 1 hour. Thereafter, the state of the cube was checked visually and with a scale, and evaluation was performed according to the following criteria. The results are shown in the "Water resistance" column of Table 2.
Circle (O): when the cube is placed on a horizontal surface with each of three perpendicular faces at the bottom, the height (the maximum height from the horizontal surface) is measured. The difference between the maximum and minimum heights measured in the three directions is less than 2 mm.
Triangle: the difference between the maximum and minimum heights measured in the three directions using the above method is 2 mm or more.
Cross (X): the honeycomb structure is not maintained and collapses during air passage.

### (c) Evaluation of CO₂ adsorption performance

The honeycomb structure was subjected to the following test. The honeycomb structure was cut into a size of 20 mm × 20 mm × 10 mm. As a pretreatment, the honeycomb structure was heated to 60 °C in a dryer to desorb CO₂. The sample was then placed in a 4-liter sealed container for 20 minutes to absorb atmospheric CO₂. A CO₂ concentration sensor was placed inside the container, and the decrease in CO₂ after 20 minutes was visually checked. The CO₂ adsorption performance in this test was evaluated according to the following criteria. The results are shown in the "CO₂ adsorption performance" column of Table 2.
Circle (O): the decrease in CO₂ concentration from the initial value is more than 100 vol ppm.
Triangle: the decrease in CO₂ concentration from the initial value is more than 50 vol ppm but less than 100 ppm.
Cross (X): the decrease in CO₂ concentration from the initial value is less than 50 vol ppm.

**Table 2**

| | Component analysis of honeycomb structure | | | Property evaluation of honeycomb structure | | | |
|---|---|---|---|---|---|---|---|
| | FT-IR analysis of solid residue after organic binder elution | FT-IR of organic binder eluate | XRD analysis after intensive heating | Formability | Cracks at drying | Water resistance | CO₂ adsorption performance |
| Example 1 | Primary amine and aromatic ring detected | Ether and acetal groups detected | Sepiolite detected | ○ | Δ | ○ | ○ |
| Example 2 | Primary amine and aromatic ring detected | Ether and acetal groups detected | Sepiolite detected | ○ | ○ | ○ | ○ |
| Example 3 | Primary amine and aromatic ring detected | Ether and acetal groups detected | Sepiolite detected | ○ | ○ | ○ | ○ |
| Example 4 | Primary amine and aromatic ring detected | Ether and acetal groups detected | Sepiolite detected | ○ | ○ | ○ | ○ |
| Example 5 | Primary amine and aromatic ring detected | Ether and acetal groups detected | Sepiolite detected | ○ | ○ | ○ | ○ |
| Example 6 | Primary amine and aromatic ring detected | Ether and acetal groups detected | Sepiolite detected | ○ | ○ | ○ | ○ |
| Example 7 | Primary amine and aromatic ring detected | Ether and acetal groups detected | Sepiolite detected | ○ | ○ | ○ | ○ |
| Example 8 | Primary amine and aromatic ring detected | Ether and acetal groups detected | Sepiolite detected | ○ | ○ | ○ | ○ |
| Example 9 | Primary amine and aromatic ring detected | Ether and acetal groups detected | Sepiolite detected | ○ | Δ | ○ | ○ |
| Example 10 | Primary amine and aromatic ring detected | Ether and acetal groups detected | Sepiolite detected | ○ | Δ | ○ | ○ |
| Example 11 | Primary amine and aromatic ring detected | Ether and acetal groups detected | Boehmite detected | ○ | Δ | ○ | ○ |
| Example 12 | Primary amine and aromatic ring detected | Ether and acetal groups detected | Bentonite detected | ○ | Δ | ○ | ○ |
| Example 13 | Primary amine and aromatic ring detected | Ether and acetal groups detected | Uncertain and unidentifiable | ○ | Δ | Δ | ○ |
| Example 14 | Primary amine and aromatic ring detected | Ether and acetal groups detected | Broad boehmite detected | ○ | Δ | ○ | ○ |
| Example 15 | Primary amine and aromatic ring detected | Ether and acetal groups detected | Kaolin detected | ○ | Δ | Δ | ○ |
| Example 16 | Primary amine and aromatic ring detected | Ether and acetal groups detected | Talc detected | ○ | Δ | ○ | ○ |
| Comparative Example 1 | Primary amine and aromatic ring detected | Ether and acetal groups detected | - | ○ | x | x | ○ |
| Comparative Example 2 | Primary amine and aromatic ring detected | - | Sepiolite detected | x | - | - | - |

The honeycomb structures of Examples 1 to 16, which contained the solid organic compound having the amino group, the organic binder, and the inorganic binder, had CO₂ adsorption capacity, generated less CO₂ during production, and further had excellent properties in terms of formability, cracks at drying, as well as water resistance. In particular, Examples 2 to 8, which contained a predetermined amount of fibrous sepiolite, showed the highest evaluation in terms of cracks at drying.

On the other hand, the honeycomb structure of Comparative Example 1 contained the solid organic compound having the amino group and the organic binder, but did not contain the inorganic binder, and showed unsatisfactory results in terms of cracks at drying and water resistance.

The honeycomb structure of Comparative Example 2 contained a solid organic compound having the amino group and the inorganic binder, but did not contain the organic binder, and therefore could not be formed.

### Description of Reference Numerals

1: Hardness tester
2: Spring material
3: Support portion
4: Tip portion
5: Sheath portion
6, 7: Green body
a1, a2: Protruding length
100: Honeycomb structure
102: Outer peripheral side wall
104: First end surface
106: Second end surface
108: Cell
112: Partition wall

## Claims

1. A honeycomb structure comprising:
a plurality of cell channels that pass through an interior of the honeycomb structure and are partitioned by partition walls,
wherein the partition walls comprise a solid organic compound having the amino group, an organic binder, and an inorganic binder.

2. The honeycomb structure according to claim 1, wherein the solid organic compound having the amino group is water-insoluble.

3. The honeycomb structure according to claim 1 or 2, wherein a content of the solid organic compound having the amino group in the partition walls is 40 to 94% by mass, a content of the inorganic binder in the partition walls is 3 to 50% by mass, and a content of the organic binder in the partition walls is 3 to 20% by mass.

4. The honeycomb structure according to claim 1 or 2, wherein a content of the solid organic compound having the amino group in the partition walls is 40 to 90% by mass, a content of the inorganic binder in the partition walls is 5 to 35% by mass, and a content of the organic binder in the partition walls is 5 to 10% by mass.

5. The honeycomb structure according to claim 1 or 2, wherein the solid organic compound having the amino group is a weakly basic anion exchange resin having the amino group.

6. The honeycomb structure according to claim 1 or 2, wherein the solid organic compound having the amino group comprises one or more selected from a styrene-based divinylbenzene polymer having the amino group and an acrylic-based divinylbenzene polymer having the amino group.

7. The honeycomb structure according to claim 1 or 2, wherein the solid organic compound having the amino group comprises a primary amine as a functional group.

8. The honeycomb structure according to claim 1 or 2, wherein the solid organic compound having the amino group comprises an aromatic ring.

9. The honeycomb structure according to claim 1 or 2, wherein the inorganic binder comprises one or more inorganic binders selected from fibrous and granular inorganic binders.

10. The honeycomb structure according to claim 1 or 2, wherein the inorganic binder comprises one or more inorganic binders selected from clay, diatomaceous earth, layered clay minerals, montmorillonite, hydrotalcite, activated clay, acid clay, hectorite, halloysite, attapulgite, silica, alumina, talc, chlorite, vermiculite, mica, illite, pyrophyllite, sericite, kaolin, sepiolite, boehmite, palygorskite, and bentonite.

11. The honeycomb structure according to claim 10, wherein the inorganic binder comprises one or more selected from sepiolite, boehmite, bentonite, silica, kaolin, and talc.

12. The honeycomb structure according to claim 11, wherein the inorganic binder comprises sepiolite.

13. A method for producing a honeycomb structure, comprising:
a step of kneading a forming raw material comprising a solvent, a solid organic compound having an amino group, an organic binder, and an inorganic binder to prepare a green body; and
a step of forming a honeycomb structure from the green body, the honeycomb structure having a plurality of cell channels that pass through an interior of the honeycomb structure and are partitioned by partition walls.

14. The method according to claim 13, wherein the solid organic compound having the amino group is water-insoluble.

15. The method according to claim 13 or 14, wherein a content of the solid organic compound having the amino group in the forming raw material excluding the solvent is 40 to 94% by mass, a content of the inorganic binder in the forming raw material excluding the solvent is 3 to 50% by mass, and a content of the organic binder in the forming raw material excluding the solvent is 3 to 20% by mass.

16. The method according to claim 13 or 14, wherein a content of the solid organic compound having the amino group in the forming raw material excluding the solvent is 40 to 90% by mass, a content of the inorganic binder in the forming raw material excluding the solvent is 5 to 35% by mass, and a content of the organic binder in the forming raw material excluding the solvent is 5 to 10% by mass.

17. The method according to claim 13 or 14, wherein the solid organic compound having the amino group is a weakly basic anion exchange resin having the amino group.

18. The method according to claim 13 or 14, wherein the solid organic compound having the amino group comprises one or more selected from a styrene-based divinylbenzene polymer having the amino group and an acrylic-based divinylbenzene polymer having the amino group.

19. The method according to claim 13 or 14, wherein the solid organic compound having the amino group comprises a primary amine as a functional group.

20. The method according to claim 13 or 14, wherein the solid organic compound having the amino group comprises an aromatic ring.

21. The method according to claim 13 or 14, wherein the inorganic binder comprises one or more inorganic binders selected from fibrous and granular inorganic binders.

22. The method according to claim 13 or 14, wherein the inorganic binder comprises one or more inorganic binders selected from clay, diatomaceous earth, layered clay minerals, montmorillonite, hydrotalcite, activated clay, acid clay, hectorite, halloysite, attapulgite, silica, alumina, talc, chlorite, vermiculite, mica, illite, pyrophyllite, sericite, kaolin, sepiolite, boehmite, palygorskite, bentonite, colloidal silica and alumina sol.

23. The method according to claim 22, wherein the inorganic binder comprises one or more selected from sepiolite, boehmite, bentonite, silica, kaolin, and talc.

24. The method according to claim 23, wherein the inorganic binder comprises sepiolite.
